# EUROPÄISCHE PATENTSCHRIFT

(11) **EP 3 574 196 B1**
(45) Veröffentlichungstag und Bekanntmachung des Hinweises auf die Patenterteilung: **06.01.2021**
(21) Anmeldenummer: 18701706.6
(22) Anmeldetag: 19.01.2018
(51) Int. Cl.: F02B 39/00, F01D 25/24, F02B 39/14, F16L 37/08, F16L 37/248, F16L 37/252, F16L 25/00

(54) **TURBOLADER FÜR EINE VERBRENNUNGSKRAFTMASCHINE**
TURBOCHARGER FOR AN INTERNAL COMBUSTION ENGINE
TURBOCOMPRESSEUR POUR MOTEUR À COMBUSTION INTERNE

(30) Priorität: 27.01.2017 DE 102017201293
(43) Veröffentlichungstag der Anmeldung: 04.12.2019
(73) Patentinhaber: Bayerische Motoren Werke Aktiengesellschaft, 80809 München (DE)
(72) Erfinder: VELTHUIS, Jan, 86899 Landsberg (DE); SAILER, Thomas, 85276 Pfaffenhofen a.d.Ilm (DE)
(86) Internationale Anmeldenummer: PCT/EP2018/051333
(87) Internationale Veröffentlichungsnummer: WO 2018/138014

(56) Entgegenhaltungen:
- WO-A2-2011/091129
- JP-A- H09 310 620
- US-A- 4 716 735

## Beschreibung

Die Erfindung betrifft einen Turbolader für eine Verbrennungskraftmaschine insbesondere für ein Kraftfahrzeug.

Moderne Kraftfahrzeuge weisen regelmäßig einen Turbolader auf, mit dem Luft verdichtet werden kann, bevor diese in Brennräume einer Verbrennungskraftmaschine des Kraftfahrzeugs eingebracht wird. Damit kann durch Erhöhung der zur Verfügung stehenden Sauerstoffmenge in den Brennräumen die Leistung der Verbrennungskraftmaschine gesteigert werden.

Bei bekannten Turboladern ist es regelmäßig erforderlich, dass insbesondere eine Welle des Turboladers in Öl gelagert wird. Insbesondere dazu weisen bekannte Turbolader regelmäßig einen Ölanschluss auf. Es gibt auch Turbolader, die weiterhin mit Wasser gekühlt werden. Dazu weisen diese Turbolader Anschlüsse auf, über die Wasser durch Kühlleitungen innerhalb des Turboladers geleitet werden kann.

Bei bekannten Turboladern mit einer Mehrzahl von Öl- oder Wasseranschlüssen ist der Ein- und Ausbau des Turboladers oft aufwendig. Eine Mehrzahl von Leitungen muss an den Turbolader angeschlossen beziehungsweise von diesem gelöst werden. Das wird oft dadurch erschwert, dass der Turbolader im Motorraum des Kraftfahrzeugs eng benachbart zu anderen Bauteilen angeordnet ist. Je nach Anordnung der Anschlüsse für Öl und Wasser kann weiterhin eine aufwendige Führung der entsprechenden Leitungen durch den Motorraum erforderlich sein. Auch das kann den Ein- oder Ausbau des Turboladers erschweren.

Aus der JP H09 310620 ist ein zentrales Gehäuse eines Turboladers bekannt. Aus der US 4716735 A ist ein Abgasturbolader für eine Fahrzeug-Brennkraftmaschine bekannt. Aus der WO 2011/091129 A2 ist ein Turbolader mit Direktkommunikation bekannt.

Hiervon ausgehend ist es Aufgabe der hier vorliegenden Erfindung, die im Zusammenhang mit dem Stand der Technik geschilderten technischen Probleme zu lösen bzw. zumindest zu verringern. Es soll insbesondere ein Turbolader für eine Verbrennungskraftmaschine vorgestellt werden, der besonders einfach montierbar ist.

Diese Aufgabe wird gelöst mit einem Turbolader für eine Verbrennungskraftmaschine gemäß den Merkmalen des Patentanspruchs 1. Weitere vorteilhafte Ausgestaltungen des Turboladers sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Erfindungsgemäß wird ein Turbolader für eine Verbrennungskraftmaschine vorgestellt. Der Turbolader umfasst mindestens drei Anschlüsse für jeweilige Leitungen, wobei die mindestens drei Anschlüsse an der gleichen Seite des Turboladers angeordnet sind, und wobei der Turbolader derart ausgeführt ist, dass die Leitungen an den mindestens drei Anschlüssen mit einer gemeinsamen Schraube montierbar sind. Erfindungsgemäß weist zumindest ein erster der Anschlüsse einen Vorsprung auf, unter den ein erster Flansch einer ersten der Leitungen nach Art einer Bajonettverbindung untergreifen kann.

Die Verbrennungskraftmaschine kann insbesondere für ein Kraftfahrzeug geeignet sein. Die Verbrennungskraftmaschine weist vorzugsweise eine Mehrzahl an Zylindern als Brennräume auf, in denen Kraftstoff mit Luft verbrannt werden kann. Bevorzugt kann Luft aus der Umgebung der Verbrennungskraftmaschine über ein Ansaugrohr in die Brennräume eingebracht werden. Dabei kann bevorzugt eine Verdichtung der Luft über den Turbolader erfolgen. Der Turbolader wird bevorzugt über das Abgas der Verbrennungskraftmaschine angetrieben (Abgasturbolader). Dazu weist der Turbolader bevorzugt einen Abgasbereich auf, der in eine Abgasanlage der Verbrennungskraftmaschine integriert ist und innerhalb dessen das Abgas einen Antrieb des Turboladers bewirken kann. Weiterhin weist der Turbolader bevorzugt einen Verdichtungsbereich auf, der in das Ansaugrohr der Verbrennungskraftmaschine integriert ist und innerhalb dessen Luft verdichtet werden kann. Der Abgasbereich des Turboladers umfasst bevorzugt mindestens eine Abgasturbine, die durch das Abgas angetrieben werden kann. Eine dabei entstehende Rotationsbewegung der Abgasturbine wird bevorzugt durch eine Antriebswelle auf eine Verdichtungsvorrichtung im Verdichtungsbereich des Turboladers übertragen. Durch die Verdichtungsvorrichtung kann die Luft im Verdichtungsbereich verdichtet werden.

Die mindestens drei Anschlüsse können insbesondere der Kühlung und Schmierung des Turboladers dienen. Über die entsprechenden Leitungen kann bevorzugt ein Kühlmittel (wie beispielsweise Wasser) und/oder ein Schmiermittel (wie beispielsweise

Öl) in den Turbolader eingeleitet und/oder aus diesem herausgeleitet werden. Innerhalb des Turboladers sind dazu bevorzugt Kühlleitungen und/oder Schmiermittelleitungen vorgesehen, die an die Anschlüsse angebunden sind.

Im montierten Zustand sind die Leitungen bevorzugt an die jeweils entsprechenden Anschlüsse angebunden. Eine besonders einfache Montage des Turboladers kann dadurch ermöglicht werden, dass die mindestens drei Anschlüsse an der gleichen Seite des Turboladers angeordnet sind. Insbesondere kann so darauf verzichtet werden, die Leitungen um den Turbolader herum zu führen. Eine derartige Anordnung der Anschlüsse an der gleichen Seite des Turboladers kann bei dem beschriebenen Turbolader dadurch begünstigt werden, dass die entsprechenden Leitungen durch die gemeinsame Schraube gehalten werden. Würde jede Leitung beispielsweise durch eine eigene Schraube gehalten, so könnte es aus Gründen der Montierbarkeit erforderlich sein, die Anschlüsse weiter voneinander beabstandet und insbesondere an verschiedenen Seiten des Turboladers anzuordnen.

Bevorzugt sind die mindestens drei Anschlüsse in einer gemeinsamen Ebene angeordnet, wobei die mindestens drei Anschlüsse durch Öffnungen in einer ebenen Fläche eines Gehäuses des Turboladers ausgebildet sind. In dem Fall ist unter einer Anordnung auf der gleichen Seite des Turboladers zu verstehen, dass die mindestens drei Anschlüsse in der gleichen ebenen Fläche des Gehäuses ausgebildet sind.

Auch wenn die mindestens drei Anschlüsse nicht in einer gemeinsamen ebenen Fläche angeordnet sind, können die mindestens drei Anschlüsse im Sinne der hier verwendeten Definition auf der gleichen Seite des Turboladers angeordnet sein. Es ist bevorzugt, dass die mindestens drei Anschlüsse derart angeordnet sind, dass die entsprechenden Leitungen im montierten Zustand parallel zueinander verlaufen. Unter parallel verlaufenden Leitungen ist hier zu verstehen, dass die Leitungen zumindest in der unmittelbaren Umgebung der mindestens drei Anschlüsse parallel verlaufen. Ist also eine Leitung an einem seitlich am Turbolader angeordneten Anschluss angebunden und verläuft diese Leitung ab einer Biegung in der Leitung parallel zu einer an einen Anschluss an einer Oberseite des Turboladers angebundenen Leitung, so verlaufen diese Leitungen in der unmittelbaren Umgebung der Anschlüsse nicht parallel zueinander.

Auch wenn die Leitungen nicht wie beschrieben parallel verlaufen, können die mindestens drei Anschlüsse im Sinne der hier verwendeten Definition an der gleichen Seite des Turboladers angeordnet sein. Dazu wird der Turbolader gedanklich durch eine Ebene getrennt, die den Schwerpunkt des Turboladers oder jedenfalls eines Bestandteils des Turboladers wie beispielsweise einem Lagergehäuse zwischen dem Verdichtungsbereich und dem Abgasbereich umfasst. Existiert mindestens eine derartige Ebene, bei der die mindestens drei Anschlüsse auf der gleichen Seite der Ebene angeordnet sind, so werden diese Anschlüsse als auf der gleichen Seite des Turboladers angeordnet betrachtet.

Die Leitungen können an die mindestens drei Anschlüsse mit der gemeinsamen Schraube montiert werden. Im montierten Zustand werden die Leitungen mit der gemeinsamen Schraube an den jeweils entsprechenden Anschlüssen gehalten. Durch die Verwendung der gemeinsamen Schraube für die Leitungen genügt beim Ein- oder Ausbau des Turboladers das Anziehen beziehungsweise das Lösen der einen gemeinsamen Schraube. Es ist nicht erforderlich, für jede Leitung eine eigene Schraube anzuziehen beziehungsweise zu lösen.

In einer bevorzugten Ausführungsform des Turboladers sind die mindestens drei Anschlüsse an einem Lagergehäuse des Turboladers angeordnet.

Das Lagergehäuse ist bevorzugt zwischen dem Abgasbereich und dem Verdichtungsbereich des Turboladers angeordnet und umfasst bevorzugt zumindest die Antriebswelle des Turboladers. Das Lagergehäuse kann auch als ein Lagerstuhl bezeichnet werden. Bei einer anderen Definition der Begriffe umfasst das Lagergehäuse einen oder mehrere Lagerstühle. Mit einer Anordnung der mindestens drei Anschlüsse an dem Lagergehäuse ist hier gemeint, dass die mindestens drei Anschlüsse an einer Außenseite eines Gehäuses an einer Stelle des Turboladers angeordnet sind, an der innerhalb des Gehäuses die Antriebswelle verläuft. Das bedeutet insbesondere, dass die mindestens drei Anschlüsse bevorzugt zwischen der Antriebsturbine und der Verdichtungsvorrichtung angeordnet sind.

Eine Kühlung und/oder eine Lagerung der Antriebswelle in Öl ist insbesondere in der Umgebung der Antriebswelle und damit insbesondere innerhalb des Lagergehäuses bevorzugt. In dieser Ausführungsform sind dazu die mindestens drei Anschlüsse an dem Lagergehäuse des Turboladers angeordnet.

Erfindungsgemäß weist zumindest ein erster der Anschlüsse einen Vorsprung auf, unter den ein erster Flansch einer ersten der Leitungen nach Art einer Bajonettverbindung untergreifen kann.

Unter einem Flansch einer Leitung ist bevorzugt eine Platte zu verstehen, die um das Ende der Leitung (das an den Turbolader angebunden wird) umlaufend ausgeführt ist. Der Flansch ist bevorzugt (zumindest im Wesentlichen) senkrecht zu der Leitung am Ende der Leitung angeordnet.

Bevorzugt wird die erste Leitung nicht in der Orientierung auf den ersten Anschluss aufgesteckt, in der die erste Leitung im montierten Zustand vorliegt. Vielmehr ist es bevorzugt, dass die erste Leitung auf den ersten Anschluss aufgesteckt und anschließend um einen Winkel von mindestens 90°, insbesondere von mindestens 130° um eine Achse der ersten Leitung gedreht wird. Durch das Drehen der ersten Leitung greift ein Teil des ersten Flansches bevorzugt unter den Vorsprung des ersten Anschlusses unter. Sofern die erste Leitung aus dieser Position nicht wieder zurück gedreht wird, ist die erste Leitung durch den ersten Flansch und den Vorsprung am ersten Anschluss fixiert. Es ist bevorzugt, dass der erste Flansch nicht rotationssymmetrisch um die erste Leitung ausgeführt ist, sondern eine Asymmetrie aufweist. Dadurch kann der erste Flansch an dem Vorsprung vorbei geführt werden, wenn die erste Leitung auf den ersten Anschluss aufgesteckt wird. Erst durch Drehen der ersten Leitung greift der Flansch unter den Vorsprung unter.

Unter einer Bajonettverbindung zwischen einer Leitung und einem Anschluss ist zu verstehen, dass die Leitung auf den Anschluss aufgesteckt und durch Verdrehen an dem Anschluss fixiert werden kann. Bei dem beschriebenen Turbolader ist die Bajonettverbindung durch den ersten Flansch realisierbar, der durch Verdrehen der ersten Leitung unter den Vorsprung untergreifen und so die erste Leitung am ersten Anschluss fixieren kann.

In einer weiteren bevorzugten Ausführungsform des Turboladers ist ein Gewinde für die gemeinsame Schraube zwischen einem zweiten der Anschlüsse und einem dritten der Anschlüsse vorgesehen.

Durch die gemeinsame Schraube werden bevorzugt zumindest die zweite Leitung und die dritte Leitung an den jeweils entsprechenden Anschlüssen gehalten. Folglich ist die Anordnung des Gewindes zwischen dem zweiten Anschluss und dem dritten Anschluss vorteilhaft. Das Gewinde ist bevorzugt in dem Material des Lagergehäuses ausgebildet.

In einer weiteren bevorzugten Ausführungsform des Turboladers sind der erste Anschluss und der dritte Anschluss als Wasseranschlüsse für eine Kühlung des Turboladers ausgebildet, wobei der zweite Anschluss als ein Ölanschluss für eine Schmierung des Turboladers ausgebildet ist.

Im Betrieb des Turboladers dreht sich die Antriebswelle mit einer hohen Drehzahl. Insbesondere deshalb ist es bevorzugt, dass jedenfalls die Antriebswelle in Öl gelagert ist. Auch kann Öl in dem Turbolader zur Kühlung dienen. Über den als Ölanschluss ausgeführten zweiten Anschluss kann bevorzugt Öl dem Turbolader zugeführt werden. Dazu kann beispielsweise Öl aus einem Ölsumpf der Verbrennungskraftmaschine oder aus einem eigenen Vorratsbehälter über den Ölanschluss in den Turbolader eingebracht werden. Der Turbolader kann weiterhin einen Ölauslass aufweisen, über den das Öl aus dem Turbolader wieder herausgelassen werden kann, um beispielsweise dem Ölsumpf oder dem Vorratsbehälter wieder zugeführt zu werden. Alternativ ist es bevorzugt, dass der als Ölanschluss ausgeführte zweite Anschluss dem Auslass des Öls aus dem Turbolader dient. In dem Fall weist der Turbolader bevorzugt weiterhin einen Öleinlass auf. Auch kann der als Ölanschluss ausgebildete zweite Anschluss zum Einlass von Öl in den Turbolader und (zu einem anderen Zeitpunkt) zum Auslass von Öl aus dem Turbolader heraus dienen.

Die Kühlung des Turboladers erfolgt bevorzugt zumindest teilweise durch eine Wasserkühlung. Dazu weist der Turbolader bevorzugt eine Kühlleitung auf, die sich zwischen dem ersten Anschluss und dem dritten Anschluss erstreckt. Der Turbolader ist bevorzugt über den ersten Anschluss und den dritten Anschluss in einen Kühlkreislauf des Kraftfahrzeugs integriert. In dem Kühlkreislauf kann beispielsweise Kühlwasser (gegebenenfalls mit einem Zusatz wie beispielsweise einem Frostschutzmittel) zirkuliert werden. Der Kühlkreislauf weist bevorzugt mindestens einen Kühler auf, über den das Kühlmittel gekühlt werden kann.

In einer weiteren bevorzugten Ausführungsform des Turboladers ist eine zweite der Leitungen an den zweiten Anschluss und eine dritte der Leitungen an den dritten Anschluss angebunden, wobei die zweite Leitung einen zweiten Flansch und die dritte Leitung einen dritten Flansch aufweist, und wobei der zweite Flansch und der dritte Flansch derart überlappen, dass die zweite Leitung und die dritte Leitung mit der gemeinsamen Schraube an dem Turbolader gehalten werden.

Im montierten Zustand liegt der zweite Flansch bevorzugt zumindest teilweise am dritten Flansch an. Die gemeinsame Schraube ist bevorzugt in dem Bereich angeordnet, in dem der zweite Flansch und der dritte Flansch durch dieses Aneinanderanliegen überlappen. Die gemeinsame Schraube erstreckt sich bevorzugt durch den zweiten Flansch und den dritten Flansch hindurch bis in das Gewinde im Lagergehäuse des Turboladers. Durch die gemeinsame Schraube werden die zweite und die dritte Leitung gehalten. Damit können diese beiden Leitungen durch Anziehen beziehungsweise Lösen der gemeinsamen Schraube an den Turbolader angebunden beziehungsweise von diesem gelöst werden.

Der zweite Anschluss und der dritte Anschluss sind bevorzugt derart angeordnet, dass eine Dicke des Flansches, der näher am Lagergehäuse angeordnet ist, ausgeglichen wird. Liegt beispielsweise der zweite Flansch am Lagergehäuse an, so ist der dritte Anschluss bevorzugt um die Dicke des zweiten Flansches gegenüber dem zweiten Anschluss derart versetzt, dass der dritte Flansch zumindest teilweise an den zweiten Flansch anliegen kann.

In einer weiteren bevorzugten Ausführungsform des Turboladers ist die erste Leitung an den ersten Anschluss angebunden, wobei der erste Flansch und der zweite Flansch derart geformt sind, dass der erste Flansch zumindest von dem zweiten Flansch drehfest gehalten wird, so dass die Bajonettverbindung der ersten Leitung nicht gelöst werden kann, solange die zweite Leitung an den zweiten Anschluss angebunden ist.

In dieser Ausführungsform sind bevorzugt an alle der mindestens drei Anschlüsse die jeweils entsprechenden Leitungen angebunden. Bevorzugt sind der erste Anschluss und der zweite Anschluss derart angeordnet, dass der erste Flansch und der zweite Flansch im hier vorliegenden montierten Zustand in einer Ebene liegen. Weiterhin ist bevorzugt, dass der erste Flansch und der zweite Flansch zumindest teilweise derart seitlich aneinander anliegen, dass der erste Flansch nicht verdreht werden kann. In dem Fall ist die erste Leitung drehfest gehalten. Insbesondere ist es bevorzugt, dass die erste Leitung nicht verdreht werden kann, wenn die erste Leitung derart orientiert ist, dass diese über die Bajonettverbindung gehalten wird (also der erste Flansch unter den Vorsprung des ersten Anschlusses untergreift) und wenn die zweite Leitung auf den zweiten Anschluss aufgesteckt ist. Damit kann die erste Leitung indirekt über den zweiten Flansch vermittelt durch die gemeinsame Schraube am ersten Anschluss gehalten werden. Mit der gemeinsamen Schraube können mithin die jeweils entsprechenden Leitungen an allen der mindestens drei Anschlüsse fixiert werden.

Als weiterer Aspekt wird ein Verfahren zum Montieren der Leitungen an den beschriebenen Turbolader vorgestellt, das mindestens die folgenden Verfahrensschritte umfasst:
a) Aufstecken der ersten Leitung an den ersten Anschluss,
b) Verdrehen der ersten Leitung, so dass die erste Leitung nach Art einer Bajonettverbindung an dem ersten Anschluss gehalten wird,
c) Aufstecken der zweiten Leitung an den zweiten Anschluss, so dass der erste Flansch durch den zweiten Flansch drehfest gehalten wird,
d) Aufstecken der dritten Leitung an den dritten Anschluss, und
e) Anziehen der gemeinsamen Schraube, so dass die zweite Leitung und die dritte Leitung durch die gemeinsame Schraube gehalten werden.

Die weiter vorne für den Turbolader beschriebenen besonderen Vorteile und Ausgestaltungsmerkmale sind auf das beschriebene Verfahren anwendbar und übertragbar, und umgekehrt.

Die beschriebenen Verfahrensschritte werden bevorzugt in der angegebenen Reihenfolge durchlaufen. Um die Leitungen von dem Turbolader wieder abzunehmen, werden die angegebenen Schritte bevorzugt entsprechend in umgekehrter Reihenfolge durchgeführt. Unter einer entsprechenden Ausführung ist dabei beispielsweise zu verstehen, dass die gemeinsame Schraube in Schritt e) gelöst und nicht angezogen wird, und dass die Leitungen abgezogen und nicht aufgesteckt werden.

Die Erfindung findet insbesondere Einsatz in einem Kraftfahrzeug mit mindestens einem Turbolader, der wie beschrieben ausgeführt ist.

Die weiter vorne für den Turbolader und für das Verfahren beschriebenen besonderen Vorteile und Ausgestaltungsmerkmale sind auf das beschriebene Kraftfahrzeug anwendbar und übertragbar.

Die Erfindung und das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine schematische Darstellung eines Kraftfahrzeugs mit einem Turbolader, und
- Fig. 2:: eine Draufsicht auf den Turbolader aus Fig. 1.

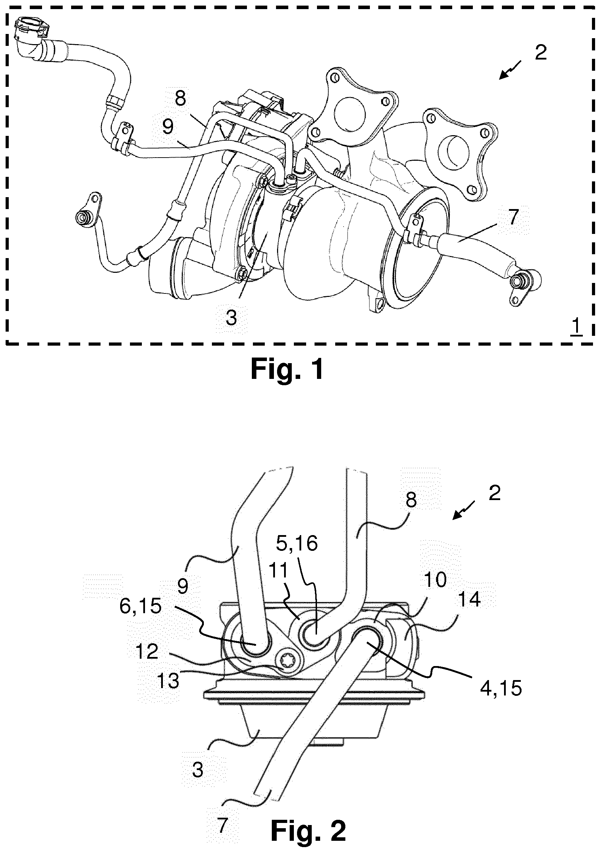

Fig. 1 zeigt ein Kraftfahrzeug 1 mit einem Turbolader 2 für eine (nicht gezeigte) Verbrennungskraftmaschine. An ein Lagergehäuse 3 des Turboladers 2 sind eine erste Leitung 7, eine zweite Leitung 8 und eine dritte Leitung 9 angebunden. Über die erste Leitung 7 und die dritte Leitung 9 kann Kühlwasser zur Kühlung durch den Turbolader 2 geleitet werden. Über die zweite Leitung 8 kann dem Turbolader 2 Öl zur Lagerung einer (nicht gezeigten) Antriebswelle zugeführt werden.

Fig. 2 zeigt eine Draufsicht auf einen Teil des Turboladers 2 aus Fig. 1. Insbesondere ist das Lagergehäuse 3 des Turboladers 2 zu erkennen. An der gezeigten Seite des Lagergehäuses 3 sind ein erster Anschluss 4, ein zweiter Anschluss 5 und ein dritter Anschluss 6 angeordnet. Die erste Leitung 7 ist an den ersten Anschluss 4 angebunden. Dabei greift ein erster Flansch 10 der ersten Leitung 7 nach Art einer Bajonettverbindung unter einen Vorsprung 14 des ersten Anschlusses 4 unter. Die zweite Leitung 8 weist einen zweiten Flansch 11 auf. Die dritte Leitung 9 weist einen dritten Flansch 12 auf. Der zweite Flansch 11 und der dritte Flansch 12 überlappen derart, dass die zweite Leitung 8 und die dritte Leitung 9 mit einer gemeinsamen Schraube 13 an dem Turbolader 2 gehalten werden. Ein Gewinde für die gemeinsame Schraube 13 ist zwischen dem zweiten Anschluss 5 und dem dritten Anschluss 6 vorgesehen.

Der erste Flansch 10 und der zweite Flansch 11 sind derart geformt, dass der erste Flansch 10 zumindest von dem zweiten Flansch 11 drehfest gehalten wird, so dass die Bajonettverbindung der ersten Leitung 7 nicht gelöst werden kann, solange die zweite Leitung 8 an den zweiten Anschluss 5 angebunden ist.

Der erste Anschluss 4 und der dritte Anschluss 6 sind als Wasseranschlüsse 15 für eine Kühlung des Turboladers 2 ausgebildet. Der zweite Anschluss 5 ist als ein Ölanschluss 16 für eine Schmierung des Turboladers 2 ausgebildet.

### Bezugszeichenliste

- 1: Kraftfahrzeug
- 2: Turbolader
- 3: Lagergehäuse
- 4: erster Anschluss
- 5: zweiter Anschluss
- 6: dritter Anschluss
- 7: erste Leitung
- 8: zweite Leitung
- 9: dritte Leitung
- 10: erster Flansch
- 11: zweiter Flansch
- 12: dritter Flansch
- 13: gemeinsame Schraube
- 14: Vorsprung
- 15: Wasseranschluss
- 16: Ölanschluss

## Patentansprüche

1. Turbolader (2) für eine Verbrennungskraftmaschine umfassend mindestens drei Anschlüsse (4, 5, 6) für jeweilige Leitungen (7, 8, 9), wobei die mindestens drei Anschlüsse (4, 5, 6) an der gleichen Seite des Turboladers (2) angeordnet sind, und wobei der Turbolader (2) derart ausgeführt ist, dass die Leitungen (7, 8, 9) an den mindestens drei Anschlüssen (4, 5, 6) mit einer gemeinsamen Schraube (13) montierbar und im montierten Zustand gehalten sind, **dadurch gekennzeichnet, dass** zumindest ein erster der Anschlüsse (4) einen Vorsprung (14) aufweist, unter den ein erster Flansch (10) einer ersten der Leitungen (7) nach Art einer Bajonettverbindung im montierten Zustand untergreift.

2. Turbolader (2) nach Anspruch 1, wobei die mindestens drei Anschlüsse (4, 5, 6) an einem Lagergehäuse (3) des Turboladers (2) angeordnet sind.

3. Turbolader (2) nach Anspruch 1 oder 2, wobei ein Gewinde für die gemeinsame Schraube (13) zwischen einem zweiten der Anschlüsse (5) und einem dritten der Anschlüsse (6) vorgesehen ist.

4. Turbolader (2) nach Anspruch 3, wobei der erste Anschluss (4) und der dritte Anschluss (6) als Wasseranschlüsse (15) für eine Kühlung des Turboladers (2) ausgebildet sind, und wobei der zweite Anschluss (5) als ein Ölanschluss (16) für eine Schmierung des Turboladers (2) ausgebildet ist.

5. Turbolader (2) nach Anspruch 3 oder 4, wobei eine zweite der Leitungen (8) an den zweiten Anschluss (5) und eine dritte der Leitungen (9) an den dritten Anschluss (6) angebunden ist, wobei die zweite Leitung (8) einen zweiten Flansch (11) und die dritte Leitung (9) einen dritten Flansch (12) aufweist, und wobei der zweite Flansch (11) und der dritte Flansch (12) derart überlappen, dass die zweite Leitung (8) und die dritte Leitung (9) mit der gemeinsamen Schraube (13) an dem Turbolader (2) gehalten werden.

6. Turbolader nach Anspruch 5, wobei die erste Leitung (7) an den ersten Anschluss (4) angebunden ist, und wobei der erste Flansch (10) und der zweite Flansch (11) derart geformt sind, dass der erste Flansch (10) zumindest von dem zweiten Flansch (11) drehfest gehalten wird, so dass die Bajonettverbindung der ersten Leitung (7) nicht gelöst werden kann, solange die zweite Leitung (8) an den zweiten Anschluss (5) angebunden ist.

7. Verfahren zum Montieren der Leitungen (7, 8, 9) an den Turbolader (2) gemäß Anspruch 6, umfassend mindestens die folgenden Verfahrensschritte:
a) Aufstecken der ersten Leitung (7) an den ersten Anschluss (4),
b) Verdrehen der ersten Leitung (7), so dass die erste Leitung (7) nach Art einer Bajonettverbindung an dem ersten Anschluss (4) gehalten wird,
c) Aufstecken der zweiten Leitung (8) an den zweiten Anschluss (5), so dass der erste Flansch (10) durch den zweiten Flansch (11) drehfest gehalten wird,
d) Aufstecken der dritten Leitung (9) an den dritten Anschluss (6), und
e) Anziehen der gemeinsamen Schraube (13), so dass die zweite Leitung (8) und die dritte Leitung (9) durch die gemeinsame Schraube (13) gehalten werden.

8. Kraftfahrzeug (1) mit mindestens einem Turbolader (2) gemäß einem der Ansprüche 1 bis 6.

## Claims

1. Turbocharger (2) for an internal combustion engine, comprising at least three connections (4, 5, 6) for respective lines (7, 8, 9), wherein the at least three connections (4, 5, 6) are arranged on the same side of the turbocharger (2), and wherein the turbocharger (2) is designed such that the lines (7, 8, 9) are installable, and held in the installed state, on the at least three connections (4, 5, 6) by means of a common bolt (13), **characterized in that** at least a first of the connections (4) has a projection (14) under which a first flange (10) of a first of the lines (7) engages in the manner of a bayonet fastening in the installed state.

2. Turbocharger (2) according to Claim 1, wherein the at least three connections (4, 5, 6) are arranged on a bearing housing (3) of the turbocharger (2).

3. Turbocharger (2) according to Claim 1 or 2, wherein a thread for the common bolt (13) is provided between a second of the connections (5) and a third of the connections (6).

4. Turbocharger (2) according to Claim 3, wherein the first connection (4) and the third connection (6) are formed as water connections (15) for a cooling arrangement of the turbocharger (2), and wherein the second connection (5) is formed as an oil connection (16) for a lubricating arrangement of the turbocharger (2).

5. Turbocharger (2) according to Claim 3 or 4, wherein a second of the lines (8) is connected to the second connection (5) and a third of the lines (9) is connected to the third connection (6), wherein the second line (8) has a second flange (11) and the third line (9) has a third flange (12), and wherein the second flange (11) and the third flange (12) overlap such that the second line (8) and the third line (9) are held on the turbocharger (2) by means of the common bolt (13).

6. Turbocharger according to Claim 5, wherein the first line (7) is connected to the first connection (4), and wherein the first flange (10) and the second flange (11) are shaped such that the first flange (10) is held rotationally fixed at least by the second flange (11), such that the bayonet fastening of the first line (7) cannot be released for as long as the second line (8) is connected to the second connection (5).

7. Method for installing the lines (7, 8, 9) on the turbocharger (2) according to Claim 6, comprising at least the following method steps:
a) mounting the first line (7) on the first connection (4),
b) rotating the first line (7) such that the first line (7) is held on the first connection (4) in the manner of a bayonet fastening,
c) mounting the second line (8) on the second connection (5) such that the first flange (10) is held rotationally fixed by the second flange (11),
d) mounting the third line (9) on the third connection (6), and
e) tightening the common bolt (13) such that the second line (8) and the third line (9) are held by the common bolt (13).

8. Motor vehicle (1) having at least one turbocharger (2) according to any of Claims 1 to 6.

## Revendications

1. Turbocompresseur (2) pour un moteur à combustion interne, comprenant au moins trois raccords (4, 5, 6) pour des conduites (7, 8, 9) respectives, les au moins trois raccords (4, 5, 6) étant disposés sur le même côté du turbocompresseur (2), et le turbocompresseur (2) étant réalisé de telle sorte que les conduites (7, 8, 9) peuvent être montées sur les au moins trois raccords (4, 5, 6) par une vis commune (13) et sont maintenues à l'état monté,
**caractérisé en ce qu'**au moins un premier des raccords (4) présente une saillie (14) sous laquelle passe une première bride (10) d'une première des conduites (7) à la manière d'un raccordement à baïonnette à l'état monté.

2. Turbocompresseur (2) selon la revendication 1, dans lequel les au moins trois raccords (4, 5, 6) sont disposés sur un boîtier de palier (3) du turbocompresseur (2).

3. Turbocompresseur (2) selon la revendication 1 ou 2, dans lequel un filet est prévu pour la vis commune (13) entre un deuxième des raccords (5) et un troisième des raccords (6).

4. Turbocompresseur (2) selon la revendication 3, dans lequel le premier raccord (4) et le troisième raccord (6) sont réalisés sous la forme de raccords d'eau (15) pour un refroidissement du turbocompresseur (2), et le deuxième raccord (5) étant réalisé sous la forme d'un raccord d'huile (16) pour une lubrification du turbocompresseur (2).

5. Turbocompresseur (2) selon la revendication 3 ou 4, dans lequel une deuxième des conduites (8) est reliée au deuxième raccord (5) et une troisième des conduites (9) est reliée au troisième raccord (6), la deuxième conduite (8) présentant une deuxième bride (11) et la troisième conduite (9) présentant une troisième bride (12), et dans lequel la deuxième bride (11) et la troisième bride (12) se chevauchent de telle sorte que la deuxième conduite (8) et la troisième conduite (9) sont maintenues sur le turbocompresseur (2) par la vis commune (13).

6. Turbocompresseur selon la revendication 5, dans lequel la première conduite (7) est reliée au premier raccord (4), et la première bride (10) et la deuxième bride (11) étant formées de telle sorte que la première bride (10) est maintenue solidaire en rotation au moins par la deuxième bride (11) de sorte que le raccordement à baïonnette de la première conduite (7) ne peut pas être détaché tant que la deuxième conduite (8) est reliée au deuxième raccord (5).

7. Procédé de montage des conduites (7, 8, 9) sur le turbocompresseur (2) selon la revendication 6, comprenant au moins les étapes de procédé suivantes consistant à :
a) emboîter la première conduite (7) sur le premier raccord (4),
b) tourner la première conduite (7) de sorte que la première conduite (7) est maintenue sur le premier raccord (4) à la manière d'un raccordement à baïonnette,
c) emboîter la deuxième conduite (8) sur le deuxième raccord (5) de sorte que la première bride (10) est maintenue solidaire en rotation par la deuxième bride (11),
d) emboîter la troisième conduite (9) sur le troisième raccord (6),
e) serrer la vis commune (13) de sorte que la deuxième conduite (8) et la troisième conduite (9) sont maintenues par la vis commune (13).

8. Véhicule automobile (1) comprenant au moins un turbocompresseur (2) selon l'une quelconque des revendications 1 à 6.
